# EUROPEAN PATENT SPECIFICATION

(11) **EP 0 716 030 B1**
(45) Date of publication and mention of the grant of the patent: **14.04.1999**
(21) Application number: 95923564.9
(22) Date of filing: 29.06.1995
(51) Int. Cl.: B65D 61/00, F16L 3/22

(54) **HOLDING DEVICE FOR PIPE MATERIAL**
HALTER FÜR ROHRMATERIAL
DISPOSITIF DE FIXATION POUR MATERIAU TUBULAIRE

(30) Priority: 04.07.1994 JP 151850/94
(43) Date of publication of application: 12.06.1996
(73) Proprietor: Kawasaki Steel Corporation, Chuo-ku, Kobe-shi, Hyogo 651 (JP); SHINWA PACKAGE KABUSHIKI KAISHA, Kobe-shi, Hyogo 658 (JP)
(72) Inventor: TERASHIMA, Kaihei Shinwa Package Kabushiki Kaisha, Kobe-shi Hyogo 658 (JP); OKUNO, Hiroshi Shinwa Package Kabushiki Kaisha, Kobe-shi Hyogo 658 (JP); NIWA, Haruho Kawasaki Steel Corporation, Handa-shi Aichi 475 (JP)
(74) Representative: Overbury, Richard Douglas
(86) International application number: PCT/JP95/01317
(87) International publication number: WO 96/01217

(56) References cited:
- JP-T- 3 505 077
- JP-U- 2 025 466
- JP-U-53 068 481

## Description

### Field of the Invention

This Invention relates to a fixture assembly for use in storing and/or transporting pipe materials. More particularly, the invention relates to a fixture assembly including a plurality of rows of fixtures for accommodating stacked, plural stages of pipe materials lying in a horizontal plane in an aligned manner, the rows including an upper row disposed on the upper-most stage of pipe materials, at least one intermediate row disposed between the adjacent stages of pipe materials, and a lower row disposed below the lower-most stage of pipe materials, with means being provided for clamping said rows together in the vertical direction.

### Background Art

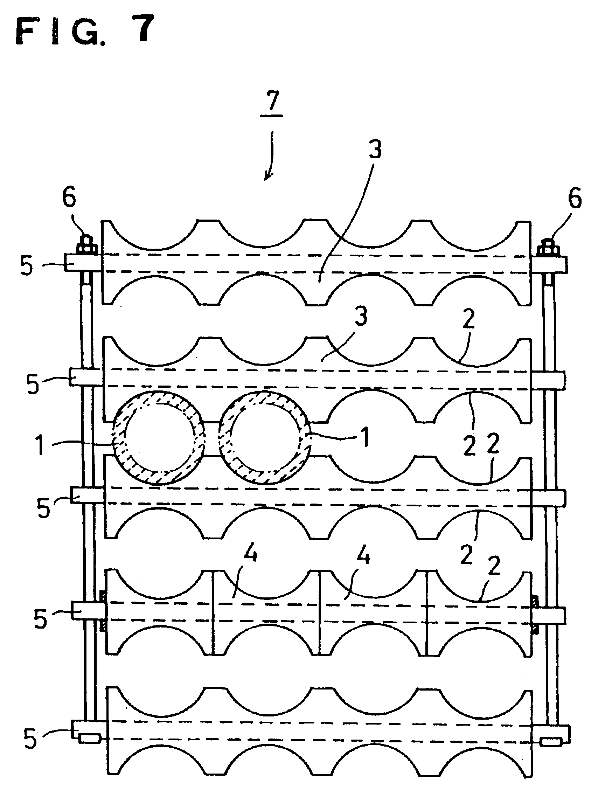

Various kinds of fixture assemblies have been proposed for storing and/or transporting pipe materials in an aligned manner. For example, Japanese Patent Publication No. 3-505077 discloses a fixture assembly for pipe materials. This fixture assembly 7 includes, as shown in Fig. 7, a plurality of fixtures in the form of elongate moldings 3 on which pipe materials 1 are to be mounted. Each molding includes recesses 2 of a semicircular cross-section spaced apart a predetermined distance in its upper and lower surfaces. The fixtures may include a plurality of fixture bodies in the form of shaped blocks 4 having the above recesses 2. The molding or each fixture body includes a hollow inside. An elongate web member 5 is threaded through the hollow inside. A plurality of stacked fixtures comprising such moldings 3 or rows of fixture bodies 4 and the web members 5 are tightly combined together by means of set bolts 6 extending vertically through the opposite ends of the web members 5, so as to form the fixture assembly.

By using such a fixture assembly 7, a plurality of pipe materials 1 may be held in an aligned manner for storage or transportation. Thus, the pipe materials 1 may be prevented from being damaged since frictional movement therebetween and slippage thereof are restricted.

### SUMMARY OF THE INVENTION

With the fixture assembly 7 shown in Fig. 7, it is impossible to alter the radius of curvature of the recesses 2 defined in the upper and lower surface of the molding 3 or fixture bodies 4. The distance between the adjacent recesses 2 is also constant. When the radius of curvature of the outer periphery of the pipe material 1 is not correctly consistent with the radius of curvature of the recess 2, the pipe material 1 cannot be stably received within the recess 2, so that scratches on the pipe materials and slippage of the pipe material may be undesirably caused.

The object of the invention is to provide a fixture assembly capable of accommodating variations in the size and number of the pipe materials lying in a horizontal plane.

According to the present invention there is provided a fixture assembly for accommodating stacked stages of pipe materials lying in a horizontal plane and arranged in Parallel relative to one another, said fixture assembly comprising fixture bodies including support surfaces for the pipe material and being located in: an upper row of fixture bodies disposed on the upper-most stage of pipe materials; at least one intermediate row of fixture bodies disposed between the adjacent stages of pipe materials; and a lower row of fixture bodies disposed below the lower-most stage of pipe materials; with means being provided for clamping said rows together in the vertical direction characterised in that (a) the support surfaces of each fixture body are constituted by an intermediate horizontal surface and a pair of oppositely inclined surfaces disposed at horizontally opposite ends of said horizontal surface and adapted to engage the outer circumference of a respective pipe material; (b) each of the fixture bodies is horizontally separable into a pair of fixture body pieces at a separation plane with each body piece including a part of the horizontal surface and one of the inclined surfaces; (c) each of the fixture body pieces includes an engagement portion at each of its opposite sides adjacent to said surfaces, said engagement portion being in the form of a protrusion or a groove extending in the horizontal direction and perpendicular to the axial direction of the pipe material: (d) a spacer member is insertable between the pieces of each fixture body at the separation plane; (e) a plate member is disposed between adjacent fixture bodies in each of the rows of fixture bodies and has an opening adjacent to the engagement portions of the adjacent fixture bodies; (f) clamp frames are disposed at the horizontally opposite ends of each of said rows of fixture bodies and have an opening adjacent to said engagement portions of the adjacent fixture bodies; and (g) a pair of bar members is provided in each of said rows of fixture bodies, each of said bar members extending through said openings of said plate members and said clamp frames of its respective row and being engaged with the engagement portions of the fixture bodies in its respective row with the opposite ends of each of said bar members being secured to the respective clamp frames in the row; said clamping means being means for tightening together in the vertical direction the respective clamp frames in said upper and lower rows of fixture bodies.

In the fixture assembly of the invention, the number of fixture bodies in each row may be easily changed. Thus, the number of pipe materials lying in a horizontal plane may be easily changed.

### BRIEF DESCRIPTION OF THE DRAWINGS

For a better understanding of the invention and to show how the same may be carried into effect, reference will now be made, by way of example, to the accompanying drawings, in which:-
Fig. 1(A) is an exploded perspective view of the entire construction of a fixture comprising a row of fixture bodies according to the invention, Fig. 1(B) is a perspective view of a spacer member, Fig. 1(C) is a perspective view of a plate member, and Figs. 1(D) and 1(E) are cross-sectional views each illustrating an engagement portion on a fixture body and a bar member to be engaged therewith;
Fig. 2(A) is a perspective view of a fixture body and a spacer member according to a first embodiment of the invention, Fig. 2(B) is a perspective view showing the connection between a bar member and a clamp frame, and Fig. 2(C) is a perspective view of a fixture body and a spacer member according to a second embodiment of the invention;
Fig. 3(A) is a perspective view of a fixture body according to a third embodiment of the invention, and Fig. 3(B) is a perspective view similar to Fig. 2(A) showing a part of a fixture body of the first embodiment of the invention;
Fig, 4(A) is a plan view showing the combination of a fixture body and a spacer member, Fig. 4(B) is a front side view showing the combination of the fixture body and the spacer member, and Fig. 4(C) is an end elevational view of the fixture body;
Figs. 5(A) through 5(C) are front side views of a fixture body with various spacer members having different widths corresponding to pipe materials of different sizes clamped therebetween, and Fig. 5(D) is a perspective view of the spacer member;
Fig. 6 is a front side view of a fixture assembly including stacked fixtures each comprising a row of fixture bodies in accordance with the invention; and
Fig. 7 is a front side view showing a fixture assembly for pipe materials in accordance with the prior art.

### BEST MODE FOR CARRYING OUT THE INVENTION

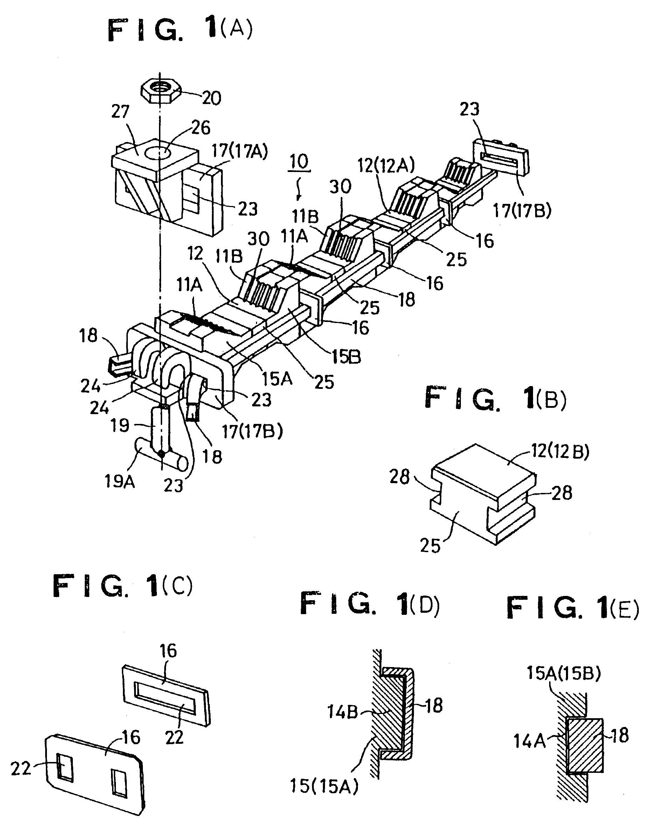

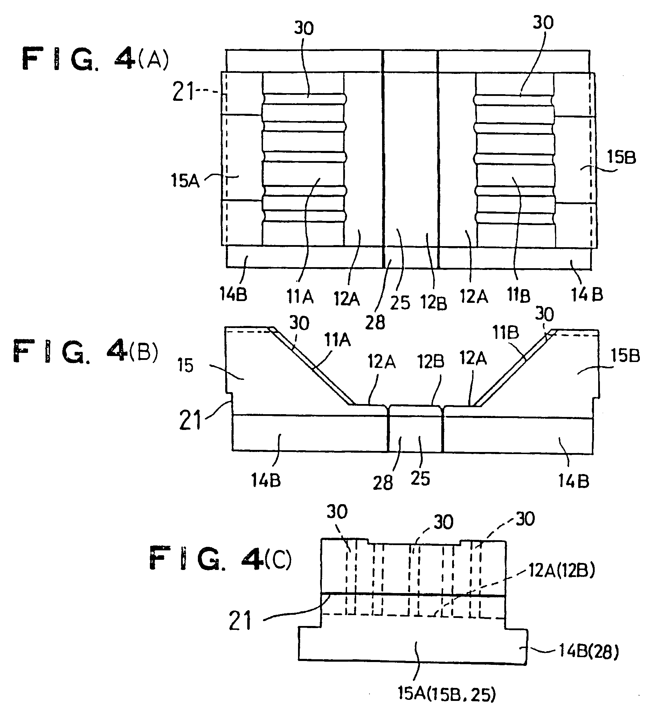

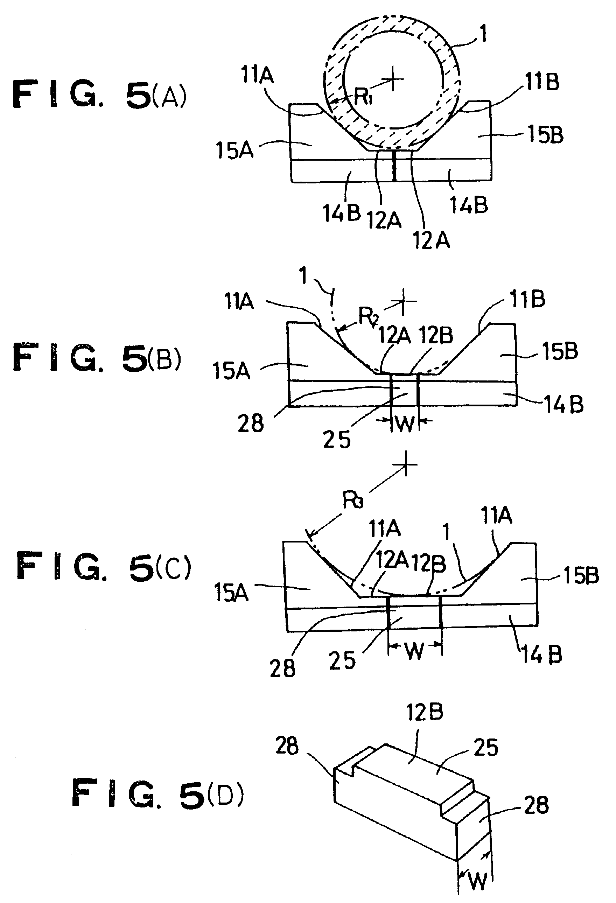

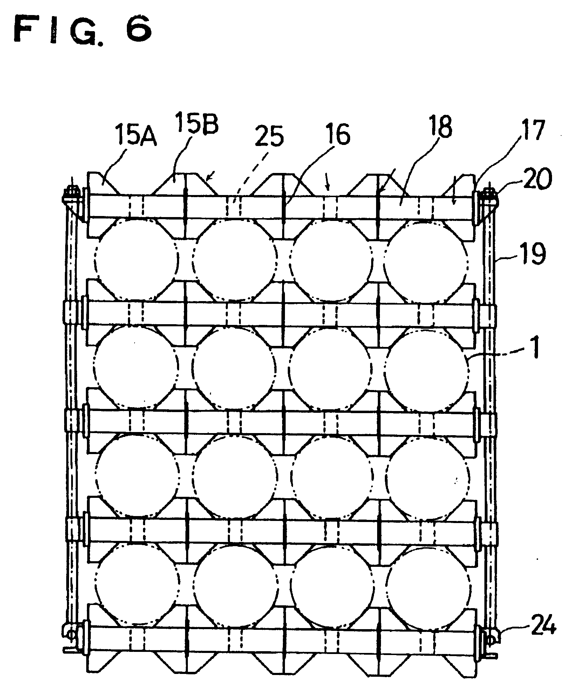

Several embodiments of the invention will be explained below with reference to Figures 1 to 6.

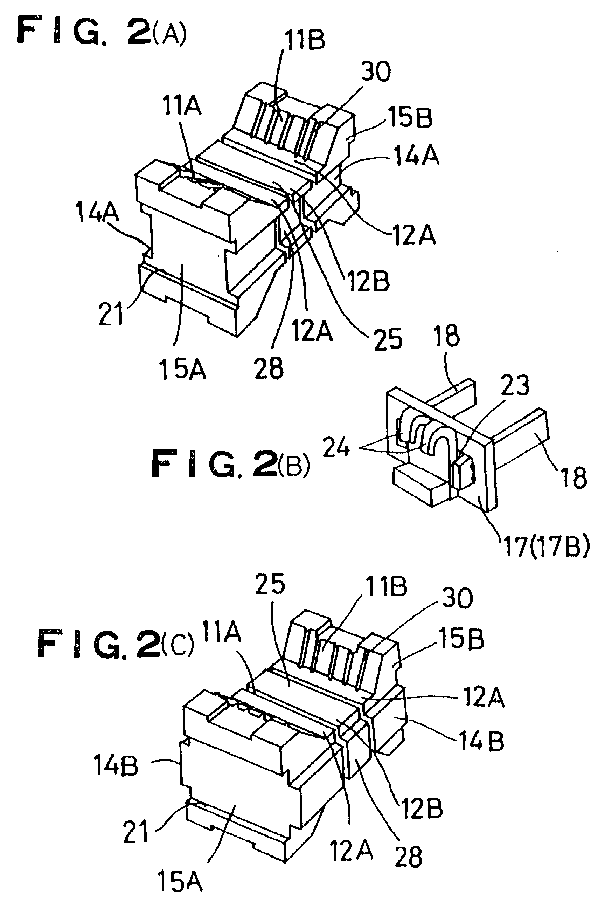

Figures 1 and 2 illustrate a first embodiment of the invention wherein, a fixture 10 for securing pipe materials 1 thereon is formed by the combination of a plurality of fixture bodies each comprising separable pieces 15A and 15B, plate members 16, clamp frames 17 and bar members 18. A plurality of pairs of set bolts 19 and nuts 20 is provided to secure a plurality of such fixtures together to form the fixture assembly. Spacer members 25 disposed between each piece 15A and 15B of the fixture bodies may be optionally used. Although such spacer members are shown in Figs. 1 and 2, the first embodiment will be explained as if it did not include the spacer members.

Specifically, an upper surface and a lower surface are formed by each pair of fixture body pieces 15A and 15B. Each of the upper surface and the lower surface defines an intermediate horizontal surface 12 for abutment with a respective pipe material 1 and oppositely disposed inclined surfaces llA and llB for clamping a respective pipe material 1 therebetween, a part 12A of the surface 12 and one of the inclined surfaces 11A and 11B being provided by each fixture body piece. As shown in Fig. 1(D) or Fig. 1(E), an engagement portion 14 is formed in the opposed front and rear side surfaces of each of the pair of fixture body pieces 15A and 15B, the front and rear side surfaces lying in a respective plane perpendicular to the plane of the surface 12. The engagement portion 14 extends horizontally in a direction perpendicular to the axial direction of the pipe material 1, so as to be engaged with a respective positioning bar member 18 which will be explained later. The engagement portion 14 may take the form of a protrusion as shown at 14B in Fig. 1(D), or the form of a groove as shown at 14A in Fig. 1(E).

The pair of fixture body pieces 15A and 15B may be separated from one another in the longitudinal direction (perpendicular to the axis of the pipe material) at a mid-point of the surface 12 extending in the horizontal direction from the lower ends of the inclined surfaces llA and llB. This allows insertion of a spacer member 25 (to be explained later) into the space between the fixture body pieces 15A and 15B.

A plate member 16( or 16') shown in Fig. 1(C), serving as an auxiliary positioning member, is disposed between each pair of oppositely disposed fixture body pieces 15A and 15B. Each of the plate members 16 includes an opening 22 (or a pair of openings 22') for permitting insertion of the bar member 18 (to be explained later) therethrough. Each of the longitudinal end surfaces of each pair of fixture body pieces is formed with a recess 21 extending in the transverse direction (i.e. in a direction parallel to the axial direction of the pipe material), as shown in Fig. 2(A). The plate members 16 are fitted into the recesses 21.

Thus, the plate members 16 and the pairs of fixture body pieces 15A and 15B, which are alternately disposed in an aligned fashion, constitute the fixture 10. Left and right clamp frames 17 are oppositely disposed at the respective longitudinal ends of the fixture 10. Each of the clamp frames 17 is disposed in a respective recess 21 in the longitudinally outer-most or inner-most fixture body piece in surface to surface contact therewith.

The clamp frame 17 includes an opening 23 for permitting insertion of the bar member 18 therethrough. The clamp frame 17 is provided, at the outer surface thereof, with a pair of left and right hooks 24 of a substantially inverted U-shaped configuration. The hooks are adapted to be engaged with the lower end portion and the intermediate shaft portion of a set bolt 19 (to be explained later). Each clamp frame 17B, other than the clamp frame in the upper-most stage (i.e. in the upper fixture 10), is provided with such a pair of hooks. The clamp frame, 17A, in the upper-most stage is provided, at the outer surface thereof, with a guide plate 27 attached thereto. The guide plate 27 includes a hole 26 for permitting insertion of the set bolt 19 therethrough.

The bar members 18 cooperate to serve as a position limiting means for securely positioning, between the pair of clamp frames 17A and 17B, the pairs of fixture body pieces 15A and 15B (the number of the pairs corresponding to the number of the pipe materials 1 to be arranged on the fixture in the transverse direction), and the plate members 16 disposed between adjacent fixture bodies Each of the bar members 18 is formed from long shaped steel or bar steel. The bar members 18 may be cut into a suitable length depending upon the number of the pipe materials 1 to be arranged in the transverse direction.

The bar members 18 are configured in their cross-sectional shape so that they may suitably fit over or fit in the engagement portions 14 in the front and rear side surfaces of the fixture body pieces 15A and 15B, the openings 23 of the clamp frames 17, 17A or 17B, and the openings 22 or 22' of the plate members 16. Specifically, each bar member 18 may be shaped into a substantially C-shaped configuration when the engagement portion 14B is in the form of a protrusion as shown in Fig. 1(D), so that the bar member 18 may cover the protrusion. On the other hand, the bar member 18 may be shaped into a rod having a rectangular cross-section when the engagement portion 14A is in the form of a groove as shown in Fig. 1(E), so that the bar member 18 may be fitted in the groove. The bar member 18 is threaded through the openings 22 and 23 of the plate members 16 and the clamp frames 17A and 17B, respectively. The opposite ends of the bar member 18 positioned outwardly of the respective clamp frames 17A and 17B are bent into a curved configuration, for example, by means of pliers, so that the fixture body pieces 15A and 15B, plate members 16 and the clamp frames 17A and 17B may be unitarily assembled. Although the opposite ends of the bar member 18 may be most conveniently bent into a curve configuration as mentioned above when the fixture body pieces 15A and 15B are assembled at a site where the pipe materials 1 are loaded, the opposite ends of the bar member 18 may be joined, for example by means of welding, to the clamp frames 17A and 17B when the fixture body pieces 15A and 15B are assembled at a work shop.

A single pipe material 1 is mounted on the support surface 12 of each of the pairs of fixture body pieces 15A and 15B which are held in an aligned manner by the plate members 16, the bar members 18 and the clamp frames 17 (17A or 17B). Then, another pair of fixture body pieces 15A and 15B are superposed on the pipe materials 1. By this, each pipe material 1 is clamped between the opposite support surfaces of the lower pair of fixture body pieces 15A and 15B and the upper pair of fixture body pieces 15A and 15B.

The above superposing operation is repeated a predetermined number of times. Then, the rod l9A at the lower end of the set bolt 19 is engaged with the hooks 24 of the clamp frame 17B in the lower-most stage. The intermediate shaft portion of the set bolt 19 is inserted between the hooks 24 and 24 of the clamp frames 17 in the intermediate stages. The upper end of the set bolt l9 is inserted in the hole 26 of the guide plate 27 attached to the clamp frame 17A in the upper-most stage. Then, the nut 20 is tightly threaded on the upper end of the set bolt 19, so as to cause the fixture bodies 15A and 15B to be tightly clamped in the

vertical direction. Although, in the embodiment shown in Fig. 1(A), a T-shaped bolt having the rod l9A for engagement with the hooks 24 at its lower end is used as the set bolt 19, any other tightening means may be used, provided that it may be assembled together with the hooks 24 and the guide plate 27. It may be noted that a clamp frame 17B of an inverted configuration may be used in place of the clamp frame 17A in the upper-most stage, in which case the hooks 24 in the upper-most and lower-most stages may be tightened together by means of a length of wire or cable.

According to a second embodiment of the invention, a spacer member 25 is disposed between the fixture body pieces 15A and 15B, of each fixture body so that the pair of fixture body pieces are separated from one another along a line extending in the axial direction of the pipe material 1, as shown in Figs. 1 through 5. The spacer body 25 includes a surface 12B which is substantially coplanar with the horizontal surface 12 of the fixture body pieces 15A and 15B. The spacer member 25 also includes opposite engagement portions 28 for the bar members 18 disposed at positions corresponding to respective engagement portions 14A and 14B of the fixture body pieces 15A and 15B.

The distance between the pair of fixture body pieces 15A and 15B in the longitudinal direction thereof may be changed by using spacer members 25 of various width W. It is therefore possible to apply a predetermined tightening pressure on the pipe material 1 clamped between the upper and lower pairs of fixture body pieces 15A and 15B, so as to obtain a stable, clamped condition of the pipe material, when different pipe materials of various radial dimensions R1, R2, R3 ... are used. It may be noted that the usage and construction of the fixture 10 for the pipe materials 1 according to the second embodiment are similar to those of the fixture 10 according to the first embodiment, except for the fact that the spacer member 25 is disposed between the fixture body pieces 15A and 15B, of each fixture body, the spacer member serving as a dimensional adjustment means for accommodating variance in diameter of the pipe materials 1.

In order to increase the ability of the fixture to position and secure the pipe materials 1, it is of course preferable to support the pipe material 1 in its outer peripheral surface by means of a three-point support method, utilizing the inclined surfaces llA and llB and the horizontal surface 12A of the fixture body pieces 15A and 15B, as well as the surface 12B defined by the upper surface of the spacer member 25. To this end, it is also possible, in an alternative embodiment, to adjustably change the angle of inclination of and the distance between the inclined surfaces llA and llB, when the diameter of the pipe material 1 is changed. In any embodiment, the fixture body pieces 15A and 15B and the spacer members 25 may be formed from recycled plastics material, so as to provide a fixture 10 capable of accommodating variations in diameter of the pipe materials 1 at a relatively low cost. It may also be noted that the fixture body pieces l5A and 15B and the spacer members 25, after use, may be completely separated from the remaining iron or steel materials, such as bar members 18. Thus, such separated material, after being melted or crushed, may be recycled as raw material for similar pipe fixtures or other plastic articles.

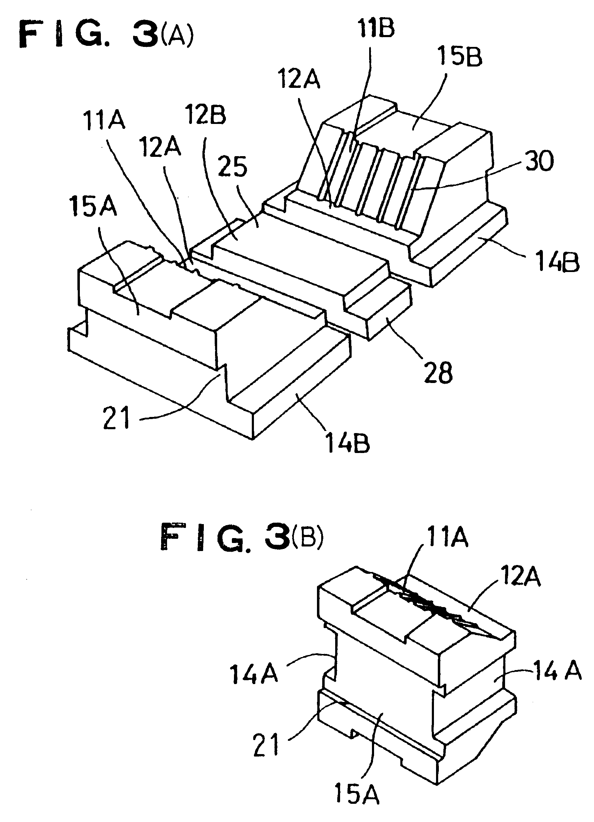

Fig. 3(A), Fig. 4 and Fig. 5 show a third embodiment of the invention. In this embodiment, the support surfaces 12A and 12B for pipe materials 1 are formed in either one of the upper surface or lower surface of the fixture body pieces 15A and 15B and the spacer member 25. In this regard, it may be noted that the engagement portions 14B and 28 are in the form of protrusions. The construction of the remaining portions and usage of the fixture 10 according to the third embodiment are similar to those of the first and second embodiments shown in Figs. 1 and 2.

Two sets of fixture body pieces 15A and 15B and spacer member 25 defining support surfaces 12A and 12B, respectively, in one of the upper and lower surfaces thereof, may be stacked and combined so as to form integral fixture body pieces 15A and 15B and an integral spacer member 25. In this case, the engagement portions 14B and 14B and 28 and 28, respectively adjacently disposed in the vertical direction, are received in a substantially C-shaped groove provided in the bar member 18. This construction makes it possible to reduce the minimum unit of the fixture body pieces 15A and 15B and the spacer member 25, whereby they may be conveniently recycled and reclaimed. It may also be noted that the single sided fixture body pieces 15A and 15B and the spacer member 25 shown in Figs. 3(A), 4 and 5 may be used in the upper-most and/or lower-most stage of the fixture assembly. This causes the lower-most stage of the fixture assembly to be flattened, so as to increase the stability of the fixture assembly, while obviating unnecessary projections or protrusions in the upper-most stage of the fixture assembly.

It may be noted that, in the above first to third embodiments, reference numeral 30 designates a plurality of protrusions provided in the inclined surfaces llA and llB of the fixture body pieces 15A and 15B for the pipe material 1 in order to prevent shift or movement of the pipe material.

## Claims

1. A fixture assembly (7) for accommodating stacked stages of pipe materials (1) lying in a horizontal plane and arranged in parallel relative to one another, said fixture assembly comprising fixture bodies including support surfaces for the pipe material and being located in:
an upper row of fixture bodies disposed on the upper-most stage of pipe materials;
at least one intermediate row of fixture bodies disposed between the adjacent stages of pipe materials; and
a lower row of fixture bodies disposed below the lower-most stage of pipe materials;
with means being provided for clamping said rows together in the vertical direction characterised in that:-
(a) the support surfaces of each fixture body are constituted by an intermediate horizontal surface (12) and a pair of oppositely inclined surfaces (11A, 11B) disposed at horizontally opposite ends of said horizontal surface and adapted to engage the outer circumference of a respective pipe material (1);
(b) each of the fixture bodies is horizontally separable into a pair of fixture body pieces (15A)(15B) at a separation plane with each body piece including a part of the horizontal surface (12A) and one of the inclined surfaces;
(c) each of the fixture body pieces includes an engagement portion (14) at each of its opposite sides adjacent to said surfaces, said engagement portion being in the form of a protrusion (14B) or a groove (14A) extending in the horizontal direction and perpendicular to the axial direction of the pipe material:
(d) a spacer member (25) is insertable between the pieces of each fixture body at the separation plane;
(e) a plate member (16)(16') is disposed between adjacent fixture bodies in each of the rows of fixture bodies and has an opening (22)(22') adjacent to the engagement portions of the adjacent fixture bodies;
(f) clamp frames (17)(17A)(17B) are disposed at the horizontally opposite ends of each of said rows of fixture bodies and have an opening (23) adjacent to said engagement portions of the adjacent fixture bodies; and
(g) a pair of bar members (18) is provided in each of said rows of fixture bodies, each of said bar members extending through said openings (22)(23) of said plate members (16) and said clamp frames (17)(17A)(17B) of its respective row and being engaged with the engagement portions of the fixture bodies in its respective row with the opposite ends of each of said bar members being secured to the respective clamp frames in the row; said clamping means being means (19,19A,20) for tightening together in the vertical direction the respective clamp frames (17A,17B) in said upper and lower rows of fixture bodies.

## Patentansprüche

1. Halteranordnung (7) zur Aufnahme gestapelter Lagen von Rohrmaterialien (1), die in einer horizontalen Ebene liegen und parallel zu einander angeordnet sind, welche Halteranordnung Haltekörper aufweist, die Stützflächen für das Rohrmaterial einschließen und sich befinden in:
einer oberen Reihe von Haltekörpern auf der obersten Lage von Rohrmaterialien;
wenigstens einer mittleren Reihe von Haltekörpern zwischen den aneinandergrenzenden Lagen von Rohrmaterialien und
einer unteren Reihe von Haltekörpern unter der untersten Lage von Rohrmaterialien;
wobei eine Einrichtung zum Zusammenspannen der Reihen in der vertikalen Richtung vorgesehen ist, dadurch gekennzeichnet, daß:
(a) die Stützflächen jedes Haltekörpers durch eine mittlere horizontale Fläche (12) und zwei entgegengesetzt geneigte Flächen (11A, 11B) gebildet werden, die an horizontal entgegengesetzten Enden der horizontalen Fläche angeordnet und dazu ausgebildet sind, sich an den äußeren Umfang eines betreffenden Rohrmaterials (1) anzulegen;
(b) jeder der Haltekörper an einer Teilungsebene horizontal in zwei Haltekörperteile (15A) (15B) unterteilbar ist, wobei jedes Haltekörperteil einen Teil der horizontalen Fläche (12A) und eine der geneigten Flächen enthält;
(c) jedes der Haltekörperteile an jeder seiner entgegengesetzten Seiten angrenzend an diese Flächen einen Eingriffsbereich (14) aufweist, der die Form eines Vorsprungs (14B) oder einer Nut (14A) hat und sich in der horizontalen Richtung und senkrecht zur Axialrichtung des Rohrmaterials erstreckt;
(d) ein Distanzstück (25) an der Teilungsebene zwischen die Teile jedes Haltekörpers einsetzbar ist;
(e) ein Plattenelement (16) (16') zwischen benachbarten Haltekörpern in jeder der Reihen der Haltekörper angeordnet ist und eine Öffnung (22) (22') angrenzend an die Eingriffsbereiche der angrenzenden Haltekörper aufweist;
(f) Klemmrahmen (17) (17A) (17B) an den horizontal entgegengesetzten Enden jeder der Reihen der Haltekörper angeordnet sind und eine Öffnung (23) angrenzend an die Eingriffsbereiche der angrenzenden Haltekörper aufweisen und
(g) in jeder der Reihen der Haltekörper zwei Stangenelemente (18) angeordnet sind, die sich jeweils durch die Öffnungen (22) (23) der Plattenelemente (16) und der Klemmrahmen (17) (17A) (17B) ihrer betreffenden Reihe erstrecken und mit den Eingriffsbereichen der Haltekörper in ihrer jeweiligen Reihe in Eingriff stehen, wobei die entgegengesetzten Enden jedes dieser Stangenelemente an den jeweiligen Klemmrahmen in der Reihe befestigt sind und die Spanneinrichtung eine Einrichtung (19, 19A, 20) zum Zusammenspannen der jeweiligen Klemmrahmen (17A, 17B) in den oberen und unteren Reihen der Haltekörper in der vertikalen Richtung ist.

## Revendications

1. Un agencement de fixation (7) conçu pour s'adapter à des étages empilés de matériaux tubulaires (1) placés dans un plan horizontal et agencés en parallèle les uns par rapport aux autres, ledit agencement de fixation comprenant des corps de fixation comportant des surfaces de support pour le matériau tubulaire et étant placés en :
une rangée supérieure de corps de fixation disposés sur l'étage le plus haut des matériaux tubulaires;
au moins une rangée intermédiaire de corps de fixation disposés entre les étages adjacents de matériaux tubulaires; et
une rangée inférieure de corps de fixation disposés au-dessous de l'étage le plus bas de matériaux tubulaires;
avec des moyens prévus pour serrer lesdites rangées ensemble dans la direction verticale, caractérisé en ce que :
(a) les surfaces de support de chaque corps de fixation sont constituées d'une surface horizontale intermédiaire (12) et d'un couple de surfaces (11A, 11B) inclinées à l'opposé, disposées à des extrémités horizontalement opposées de ladite surface horizontale et adaptées pour venir en contact avec la circonférence extérieure d'un matériau tubulaire (1) respectif;
(b) chacun des corps de fixation est séparable horizontalement en un couple de pièces de corps de fixation (15A) (15B) suivant un plan de séparation, chaque pièce de corps comprenant une partie de la surface horizontale (12A) et l'une des surfaces inclinées;
(c) chacune des pièces de corps de fixation comprend une partie d'engagement (14) à chacun de ses côtés opposés adjacents auxdites surfaces, ladite partie d'engagement se présentant sous la forme d'une saillie (14B) ou d'une rainure (14A) s'étendant dans la direction horizontale et perpendiculairement à la direction axiale du matériau tubulaire;
(d) un organe d'espacement (25) petit être inséré entre les pièces de chaque corps de fixation au plan de séparation:
(e) un organe formant plaque (16) (16') est disposé entre des corps de fixation adjacents dans chacune des rangées des corps de fixation et présente une ouverture (22) (22') adjacente aux parties d'engagement des corps de fixation adjacents;
(f) des cadres de serrage (17) (17A) (17B) sont disposés aux extrémités horizontalement opposées de chacune desdites rangées de corps de fixation et présentent une ouverture (23) adjacente auxdites parties d'engagement des corps de fixation adjacents; et
(g) un couple d'organes formant barre (18) est prévu dans chacune desdites rangées de corps de fixation, chacun desdits organes formant barre traversant lesdites ouvertures (22) (23) desdits organes plats (16) et desdits cadres de serrage (17) (17A) (17B) de sa rangée respective et étant en prise avec les parties d'engagement des corps de fixation dans sa rangée respective, les extrémités opposées de chacun desdits organes formant barre étant fixées aux cadres de serrage respectifs dans la rangée; lesdits moyens de serrage étant des moyens (19, 19A, 20) conçus pour serrer ensemble, dans la direction verticale, les cadres de serrage (17A) (17B) respectifs dans lesdites rangées supérieure et inférieure de corps de fixation.
